# EUROPEAN PATENT SPECIFICATION

(11) **EP 1 602 999 B1**
(45) Date of publication and mention of the grant of the patent: **16.09.2015**
(21) Application number: 04102551.1
(22) Date of filing: 04.06.2004
(51) Int. Cl.: G06F 21/62, G06F 21/16, G06F 21/32

(54) **DATA REPRODUCTION METHOD**
VERFAHREN ZUR WIEDERGEWINNUNG VON DATEN
MÉTHODE DE RESTITUTION DE DONNÉES

(43) Date of publication of application: 07.12.2005
(73) Proprietor: Swisscom AG, 3050 Bern (CH)
(72) Inventor: Van Kommer, Robert, 1752, Villars-sur-Glâne (CH); Riordan, John, 3006, Bern (CH)
(74) Representative: P&TS SA (AG, Ltd.)

(56) References cited:
- EP-A- 0 999 488
- WO-A-02/052388
- US-A1- 2003 195 935
- SIMON LIU, MRK SIVERMAN: "A Practical Guide to Biometric Security Technology" IT PROFESSIONAL, IEEE, vol. 3, no. 1, January 2001 (2001-01), pages 27-32, XP002308105 USA ISSN: 1520-9202

## Description

### Field of the invention

The present invention concerns a data reproduction method. More specifically, the present invention concern a method for reproducing protected data, for example data for which access is restricted to a limited number of users. The present invention also addresses the identification and authentication of persons accessing data objects.

### Description of related art

It is already known to protect data files with a password for restricting their access to users knowing the password. Passwords however have a number of drawbacks, including the difficulty for most users to remember them, the small amount of effort needed to guess many of them, and the need to transmit the password in advance through a confidential channel. Moreover, the length and complexity of the password is a compromise between requirements for shorter codes that are easier to understand and to enter, and longer codes which are more resistant against brute force attacks.

Other authentication systems have been based on the presentation of a personal item, like a key, a chip card, etc. This item is however expensive to produce and distribute; moreover, it can be copied, faked or stolen.

Biometric recognition methods have also been used mainly for protecting access to restricted areas and protected devices. Biometric user recognition is based on biometric characteristics of the user (e.g. fingerprints, iris, retina, face) or produced by the user (e.g. voice, key stroking pattern, handwriting or handwritten signature), and is used for applications requiring an increased security and/or a more convenient use. Many different biometric characteristic can be used, each with various benefits and drawbacks.

Biometric recognition methods usually require some form of biometric sensor (e.g. a fingerprint capacitive sensor, a camera, a microphone, a touchpad, or a keyboard) for recording the user's biometric characteristic, and a biometric user recognition program for processing the recorded data and associating it with one or several pre-recorded models, for example with the biometric characteristics of one or several registered users.

A typical biometric user recognition program may include steps for prompting the user to record his biometric characteristics, for example by putting his finger on a fingerprint sensor or by speaking some words. Depending on the program, the biometric characteristic may then be converted into a vector or matrix, and compared to reference vectors or matrices, or compared with pre-recorded models using e.g. a neural network or Hidden Markov Models (HMMs). The action triggered by the biometric user recognition program then depends on the result of the comparison.

Hence, a biometric user recognition program is usually more complex than a recognition program based on a PIN or on a password. Moreover, the result of the recognition depends on the biometric sensor and on the program itself; different biometric user recognition programs may provide different results when deciding if a tested biometric characteristic matches a specific reference. Likewise, the recognition result may be influenced by the prompt, e.g. when a user is requested to repeat a sentence. Consistent predictable results of the biometric recognition process performed by different systems thus strongly rely on the use of a common biometric user recognition program.

EP-A2-0 999 488 discloses a system and method for the secure distribution of electronic documents which reduces the likelihood of unauthorized reproduction and redistribution by either authorized or unauthorized recipients. A self-protecting document (SPD) contains an encrypted document as well as a secure set of permissions and the software necessary to process the document; full decryption of the document is performed as late as possible so as to minimize the possibility of intercepting the document before it has been fully rendered to screen or to paper.

The article Simon Liu, Mark Sivermann, "A practical guide to biometric security technology", IT Professional, IEEE, vol. 3, no. 1, January 2001, p. 27-32*,* give an overview over different biometric security mechanisms.

US20040073803A1 discloses biometric data, such as fingerprint data, of at least one authorized user of a digital multimedia product is embedded into a digital multimedia product, to thereby control use of the digital multimedia product by a prospective user who obtains access to the digital multimedia product. The digital multimedia product, including the biometric data of the at least one authorized user that is embedded therein, is stored in a digital storage medium. At least some use of the digital multimedia product by a prospective user is prevented upon failure to match biometric data of the prospective user to the biometric data that is embedded in the digital multimedia product.

It is an aim of the invention to provide an improved method for protecting data using biometric recognition methods. This aim is achieved with a method having the features of the method claim.

In addition, the data reproduction application is also embedded within the data, so that even users who do not have a suitable program would be recognized and be able to reproduce the data.

The biometric user recognition program may comprise a step of capturing the user's biometric characteristics and comparing them with reference biometric characteristics captured during an enrolment step and stored in the object or in a remote repository. When both sets of characteristics match, the desired rights may be granted to the user.

This has the advantage that the biometric user recognition program is embedded within the protected data, and that more predictable recognition results may be achieved. Furthermore, the prompt displayed to the user for requesting him to enter his biometric data is independent from the device on which the biometric data are actually entered.

In another embodiment, the biometric user recognition program may comprise a step of displaying or reproducing the user's reference biometric characteristics captured during an enrolment step on the user's device and/or on another device. Those characteristics may be verified by a human operator who would then grant or refuse some rights, for example access to data in the object.

### Brief description of the drawings

The invention will be described with reference to the following drawings wherein:

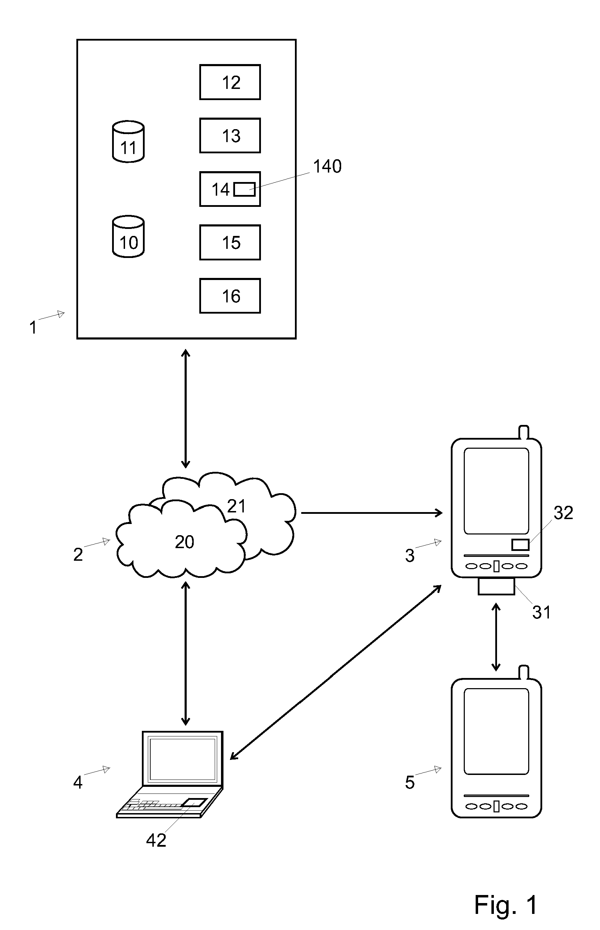

Fig. 1 shows a schematized representation of a possible system for distributing and reproducing data according to the invention.

### Detailed Description of the Invention

Figure 1 shows a user device 3 including an interface for a wireless telecommunication network 2, such as a cellular telecommunication network 21, and/or an Internet interface for accessing the Internet 20. The user device 3 may be a mobile equipment, such as a mobile phone, a PDA, a laptop, a wristwatch, etc., and preferably includes an identification module 31, for example a SIM card (subscriber identification module) as well as a biometric sensor 32. The biometric sensor collects biometric data belonging to the user or produced by the user. In one embodiment, the biometric sensor is made up of a microphone for recording the user's voice. In another embodiment, the biometric sensor is made up of a camera or CCD sensor for recording an image of the user's face, iris, retina, etc. Other types of sensors for performing biometric recognitions based for example on the user's fingerprint, palmprint, signature, handwriting, keystroke pattern, etc., may be used. In an embodiment, several types of biometric recognition methods are performed with one single user device 1 for improving the reliability of the recognition process. In a preffered embodiment, the biometric sensor allows a human operator toeasily perform a comparison of the recorded biometric characteristics. In another embodiment, the biometric recognition method is combined with another more conventional user recognition method, using for example a password or PIN, or a chip card. It may for example be required for the user to simultaneously, or within a single session, utter one word and press some keys on the keypad.

The user's device 3 includes data processing means (not shown) and data reproduction means for copying, storing and reproducing data. The data processing means may include for instance a processor and memory system as well as an operating system, for instance a Symbian, Palm, Windows, Windows CE, Linux or any other kind of suitable operating system. Applications stored and run by the data processing means include data reproduction software, and biometric user recognition software for recognizing the user from data collected by the biometric sensor 32. Data that may be stored in the user's device 3 and run by the data reproduction software may include text, image, video, audio (including ring tones), program (including computer game) or multimedia data, or represent any kind of static or dynamic identification document, including an electronic passport, electronic entrance card, ticket, lottery ticket, e-money, e-voting bulletin or digital driver license, for instance.

As will be described later, downloaded data is encapsulated into data objects. Objects in this context refer to the computer science programming language concept of Object Oriented Programming (OOP). Objects may include a main object and a hierarchy of sub-objects with possibly different levels of identification/authentication and content. For instance, one sub-object may include data and methods or program code portions for the user's recognition, while a second sub-object may include data reproduction and rendering methods adapted to the type of data content and to the user's device and preferences. The main object is preferably signed, hash-coded and encrypted before transmission, possibly using procedure run by the SIM card 31 in the user's device 3.

The user's device 3 preferably also includes an interface for a personal area network system (PAN), for example a Bluetooth, IrdA, HomeRF, NFC (Near Field Communication, as described on www.nfc-forum.org), or WLAN interface, for wirelessly communicating with devices 4, 5 in close proximity.

The user's device 1 can download data over the network 2 from one or several databases 10 in one or several remote data repositories 1. The repository 1 may be centralized or made up of any amount of devices in a peer-to-peer network.

The data repository 1 preferably includes or can access a user profile database 11 for storing profiles of registered users who download data. The profile of each user may include for instance one or several of the following content:
▪ the user's biometric characteristics (biometric signature),
▪ identification data, including for example the name, postal address, electronic address, billing address, phone and fax number, etc. of the user,
▪ an alias,
▪ the user's preferred language,
▪ a prepaid monetary account,
▪ features of the user's device 3 such as the display resolution, bandwidth, suitable or desired data transfer rate, applications skins, audio bandwidth, audio compression, number of audio channels, available plug-ins, available or preferred data formats, etc.,
▪ features of the biometric sensor 32 and/or of the biometric recognition software available or preferred by the user, including for example the type of sensor, type of biometric recognition, and parameters of the recognition available or selected by the user.
▪ Logfile (history) of user-related events, including the users' accesses to the repository, wrong logins, last data object downloads, billing-related events, and so on.

The data repository 1 further preferably includes signing means 12 for signing data objects sent to the user's device, time stamp means 13 for adding a time stamp to the objects, encryption means 14 for encrypting the objects with an encryption key 140, a billing server 15 for billing the download of data and other services to the user, and encapsulating means 16 for building software objects embedding data from the database 10, a biometric user recognition program, and a data reproduction application. Software objects built by the encapsulating means 16 may be transferred to the user's device 3 in push or pull mode, for example from a ftp or http server or as e-mail. In a preferred embodiment, the software object may be purchased using a network based service, typically a Web service or a Web page, or by an interactive session with messages, for instance SMS, MMS or email, invocated by the data object purchasing device 4 or 3.

Figure 1 further illustrates a device 4 preferably operated by the same user as the device 3 and used for purchasing data objects from the data repository 1. The data object purchasing device may be made up of a personal computer used by the same user as the user of the device 3 and connected to the data repository over the Internet 20. It preferably includes a biometric sensor 42 of the same type as the sensor 32 of the user's device. The user's biometric data can thus be captured either on the data object purchasing device 4, or preferably on the user's device 3.

Purchased data objects may be downloaded to the device 4 and transferred to the user's device 3 over a local network, for example using a Bluetooth, NFC, WLAN, HomeRF, IRDA, USB, Firewire, etc. local connection. In another embodiment, purchased data objects are directly loaded from the repository 1 into the user's device 3. In still another embodiment, data objects are ordered directly with the user's device 3. Downloaded objects are uniquely identified by the unique hash code added by the remote data repository system 1. The decryption key needed for executing the or some program code portions in the data object may be transferred in advance or later on during a separate session and/or over a different channel, for example during enrolment or over the personal area network during a session with some proximity device. A single object may require different decryption keys and/or different biometric protections for decrypting respectively accessing different sub-objects. Moreover, a time-synchronous decryption procedure can be used to time-synchronously decrypt and execute objects, using for example a decryption key valid only during a limited time window during which the user recognition has to be performed.

Figure 1 further illustrates a second mobile device 5 preferably owned by a different user from the user of the device 3, and connected with this user's device over a wireless short range interface (PAN, personal area network), for example a Bluetooth, NFC, IRDA, WLAN, Home-RF, etc. interface. The second device 5 preferably also includes software and hardware reproduction means for reproducing data objects transferred from the user's device 3 over this wireless interface. The second device may also include means for displaying or reproducing biometric characteristics embedded within an object, for example an image of the face of an authorized user of the object. The device 5 may optionally include a wireless or Internet interface for the network 2.

Download, and/or reproduction, of a data object may be initiated manually by one of the users of the devices 3 or 5, or automatically instigated when both devices are in contact (i.e. when the personal area networks of both devices are overlapping), or triggered by any other event or application run on the user's device 3, including calendar, scheduler and e-mail applications.

We will now describe an example of a possible method for enrolment, purchasing and reproduction method according to the invention.

### Enrolment; upload of user biometric data

During this preliminary enrolment step, user biometric data are retrieved by the remote data repository system 1. The enrolment, i.e. the process of capturing and transferring to the repository 1 user biometric data, may be performed at a different time and with a different device than the purchase of objects embedding this biometric data, which will be described later. The user's biometric data retrieved by the repository 1 during this enrolment process may be stored into the database of user profiles 11 and associated to one or several data objects purchased by this user at a later stage. The user's data stored may include for instance a vector, a matrix, an image, a set of HMMs or other user-dependant parameters computed in the device 3, 4 used for enrolment or in the repository 1 from data captured by a biometric sensor.

In an embodiment, enrolment is performed over a web or wap site displayed by the device 3, 4 used for enrolment, for example a site of a provider of data objects. This site provides the possibility for a user to upload to the repository 1, preferably over a secured Https session, his preferences (language, skins, type of biometric sensor, features of the user's device 3, operating system, available fonts, available applications and plug-ins, audio and video decompression programs, display resolution, bandwidth, billing preferences, etc.) and his biometric data captured on the enrolment device 3, 4 with a biometric sensor 32, respectively 42.

The user may also enroll with the remote data repository using messages, including USSDs, SMS, MMS, emails, etc., which may include a biometric signature of the user. In another embodiment, the user's biometric data are stored in the user's device 3 or in the user's object purchasing device, possibly in a cookie, and transmitted to the central data repository 1 or to the unit responsible for embedding this biometric data in the object each time the user requests a new biometric protected object.

In one embodiment, biometric data stored into the user's profile 11 is valid only until an indicated date or only during an indicated time window. Once this validity is expired, the user is requested to capture and upload new biometric data, either immediately after expiry, during the next access to the remote data repository, or in any case before the next object download.

### Data object selection and purchasing

During this step, a user selects the data object he wants to download into his user's device 3. The data may be static data stored e.g. in the object database 10, or dynamic data generated on the user's request. The user selects the data object he wants to purchase on a text or graphic interface, or indicates this object in a message, including SMS, sent to the repository 1.

The data download is typically initiated after entering of a specific selection and ordering command by the user; data download initiated by the data repository 1, by any application in one of the devices 1, 3, 4, 5 or the SIM card 31 or in the network 2 is also possible.

The download of each item of data may be billed to the user by a billing system 15, using for example a prepaid account, a credit card, a billing third party, as part of a subscription, or the billing services of the operator operating the telecommunication network 2. A loyalty program may be automatically updated for rewarding regular users with credits.

The data object may include data code portions for automatically generating billing-related events, for example for automatically sending orders to debit a user's account, when the data object is used, accessed, reproduced, copied, and/or installed for example.

### Encapsulation of data objects and transmission to the user

After the selection and purchasing process, and following a possible solvability check, the data repository system 1 builds a software object embedding the purchased data content, suitable data reproduction program code and suitable biometric user recognition program code. The embedded data reproduction program code, for example an embedded data player, and the biometric user recognition program code possibly depend on the user's preferences and the device's features, as indicated in the user profile 11 or determined during the purchasing process. For example, in one embodiment, the data reproduction program would depend on the operating system available on the user's device, whereas the type and parameters of the biometric recognition test program could depend on the available biometric sensor and on the user's preferences. The data content itself may be adapted to the user's device 3 and preferences indicated in the database 11 or in the purchase order, for example in order to take into account the available display resolution, bandwidth, and number of audio channels.

A hash code of the encapsulated data object is then calculated and added to the object. This hash code, or the whole object, is then preferably electronically signed by the module 12 with the signature of the remote data repository, thus allowing the recipient to check the authenticity and origin of the downloaded object. A time stamp is preferably added by the module 13, allowing the recipient to check the time and date at which the object has been prepared. The object, or at least parts of the content and/or embedded program code, is preferably encrypted by the encryption means 14, using for instance a symmetric key 140 or preferably a user's public asymmetric encryption key stored in the user's database 11. In an embodiment, the encryption key may be computed or retrieved directly from the user's biometric data.

The encapsulated data object is then transferred to the user's device 3 and stored into this device. The object may be directly downloaded to the user's end device 3 through the network 2, or first transferred to the purchasing device 4 and transferred from this device to the user's device over a public area network. In another embodiment, data is transferred to the user's device using a physical data support, for example a magnetic, optic or electronic memory support.

### Biometric user recognition

The object received by the user is de-encapsulated in order to extract first the biometric user recognition program which is executed on the user's device 3 in order to identify the user, or to verify an alleged identity. The biometric recognition program may comprise for example an executable application or an applet running in a Java environment.

In a typical embodiment, the biometric recognition program first prompts the user to record his biometric data with the available biometric sensor 32, and captures the biometric data. The identity of the user is then determined or verified by comparing the captured biometric data with user reference data stored as part of the data object, or retrieved from the central repository 1. Access to the data content of the object is refused if the user cannot be identified or if the alleged identity does not match the entered biometric data.

In another embodiment, the user's biometric data are captured in advance, stored in a memory portion of the device 3 or of the chip car 31, and retrieved when needed for accessing a downloaded object. This embodiment has the advantage that the user does not need to capture his biometric data each time he wants to download or reproduce data content. The biometric user recognition program may check if biometric data are available in a memory portion, and check the creation date and validity of these data before possibly prompting the user to capture new biometric data.

In yet another embodiment, the user's biometric data (for example a photo of the user's face) stored in the data object are displayed by the device 3 and/or 5 and verified by a human operator for granting or refusing access to the data content, or for granting or refusing other rights to the verified user.

In a variant, the biometric test is used for verifying if the user belongs to an either limited (closed) or non-limited group of authorized users. In this case, a determination of the exact user's identity may not be necessary. For example, the task of the biometric recognition program may be to verify the age of the user in order to restrict access of children to offensive data content, or to verify if the user belongs to a specific closed user group.

If the user has been positively recognized, his access rights to various parts of the data object are verified by the program or by the human operator. Different users may have access to different parts of the data content, or to different portions or methods of the embedded program code. Users may have different rights for reading, modifying, storing, editing, copying, backing-up, administrating or forwarding various parts of the data object. Furthermore, digital rights management (DRM) methods may be used for restricting e.g. the number of accesses allowed to the data content, the time period during which the data content may be accessed, the type and serial number of authorized data reproduction devices, or the date on which the data object will automatically destruct or block itself.

If the user's right does not allow the access requested by the user, access is refused. In one embodiment, the user's rights may be purchased separately from the data content itself; for example, it may be possible to purchase with the user's device 3 supplementary rights, for instance rights for supplementary access to one item of content.

If on the other hand the user's access rights allow it, the data content of the downloaded data object is reproduced by the user's device 3, for example visually or acoustically. The data content may also be stored in a memory portion of the user's device 3 for later access.

The biometric user recognition program embedded into the data object may be performed immediately after the download, and/or before each access to the data object, and/or before each copy or installation of said data object, and/or at a random time during use of said data object, and/or after a predetermined number of uses or period of use of said data object.

### Data decryption and restitution

If the biometric user recognition program grants an access right to the user for the data embedded within the data object, the data content is decrypted using for example a symmetric key 140 or one of the user's 3, 5 private asymmetric decryption key 140 stored for example in the user's SIM card 31, in the object itself, in the user's device or in the central repository.

In an embodiment, the decryption key 140 is computed directly from the user's biometric data. The electronic signature, the time stamp and the hash code are verified in order to reliably identify the object.

In yet another embodiment, no specific encryption or decryption key is used; in this case, confidentiality of the data content may be ensured by the embedded data reproduction application which may be specific to each data object.

The decrypted data content is then reproduced using a data reproduction application embedded in the data object. Billing-related events may be generated.

The data reproduction step may include a step of dynamically modifying code portions of the data object, for instance in order to constantly adapt the biometric user recognition program to new needs or uses.

### Transfer to a device 5 of a second user

In one embodiment, two devices 3, 5 are involved. A data object received by the first device 3 may then be transferred over a wireless personal area network to the second device 5 owned by a different user.

In one embodiment, the device 3 transmits to the second device 5 the whole data content of the object, including the biometric data needed for accessing this content, and possibly even including the data reproduction application needed for reproducing this content with the device 5. At the end of this process, the data content of the object may be accessed by both devices 3, 5 which have the same access rights.

In a second embodiment, the device 3 transmits to the second device 5 the whole object. The user of the device 5 is recognized, using biometric recognition methods or other types of recognition methods, and the same or a different access right to the received object is granted. This embodiment requires however to grant some rights on the object to the user of the device 5.

In a third embodiment, the device 3 downloads the data object from the remote data repository 1 and forwards it to the second device 5 without even attempting to reproduce it. In this case, only the user of the second device 5 is required to have access rights on the downloaded and will reproduce it; the device 3 merely acts as a relay and possibly as a purchasing device. The downloaded data object may however include data content, for example an image of the user of the device 3, allowing the user of the second device 5 to verify that the first user is indeed the genuine owner of the data object. This embodiment may be used for allowing the owner of the second device 5 to verify documents or tickets owned by the user of the first device 3, and to verify that this user is indeed the genuine owner of those documents.

In a fourth embodiment, the device 3 accesses the downloaded data content using the biometric data of its user, and transmits to the second device 5 decrypted data, or encrypted data along with a suitable decryption key. This embodiment has the advantage of preserving the confidentiality of the biometric data of the first user toward the second user.

In a fifth embodiment, the second device 5 first transfers an encrypted constant and an encrypted object to the device 3 over the PAN link. The user 3 is identified using biometric data, his access rights are verified, and if the test results are positive the encrypted object is decrypted by the device 3 and the program code portions embedded in the object are executed by the device 3 on the device 5, using a bidirectional communication link, and physical hardware resources of the device 5. Biometric data of the user of the device 3 may be reproduced by the second device.

As already mentioned, the transfer of a data object from the first device 3 to the second device 5 may be initiated by the user of the first device 3, by the user of the second device 5, or automatically when a connection is established between the two devices or when another condition is met. Alternatively, the device 5 may be continuously scanning its local environment for data objects in local devices 3; a connection with the first device 3 could be effected without the intervention of the user of this device. Depending on the PAN coverage of the device 5, this method may be used for example in order to track the displacements of the first device 3, to automatically exchange information or synchronize programs when the two devices 3, 5 are in contact, or to prevent access of the user of the first device 3 to restricted areas.

### Embedding a log file of events into the data object

In a preferred embodiment, accesses to the data object by the user's device 3 and/or 5, and other object-related events, are registered into a log file embedded within the data object.

The access may be registered immediately after reception, after decryption, when the data object is reproduced, copied, moved or edited, and/or when the data object is forwarded. It is also possible to register different accesses of the same type, or of different types, into the log file.

Other events which may be registered include for example restitution, edition, copy, manipulation, attempts to hack the data content, billing-related events, etc.

The information stored into the log file relating to each access preferably comprises at least the date and time, the type of access, and information for identifying the user device and/or for identifying the user. At least part of the information may be stored in a portion of the data object, or in a manner, which makes it difficult to edit, remove or forge. For example, part of the log file may be embedded as a watermark in the data content.

The information for identifying the user device may include for example the IMSI or MSISDN or the user's device. The information for identifying the user may include his biometric data, his full identity (name, address, etc.) or an anonymous alias.

Successive accesses or access trials to the same data object by different devices or by different users are added to the log file or recorded in the data object. This allows a complete traceability of the data object, and the retrieval from the log file of the complete list of subsequent users, using devices, and accesses to the object. As the users are identified using biometric data, the log file can include a list of verified users.

The size of the log file may be restricted. If the number of access records exceeds a prescribed limit, it may be possible to automatically erase the older records, or the less important records. In an embodiment, a copy of the deleted log file records is sent to a central repository, for instance to the remote data repository 1.

Log files access is recorded into the data object by a program code portion embedded within the data object itself, and executed by the data reproduction application and by other methods for accessing data embedded within the data object. The update of the log file is thus independent from the applications available in the user device 3.

In an embodiment, the identity of the user in the log file is replaced by an alias, which may have been chosen by the user during the enrolment, automatically determined by a software, or which might correspond to the biometric data of the user. If the identity of the user in the log file is replaced by an alias, a correspondence between the alias and the true identity of the user may be maintained in a table for example in the remote data repository 1. Alternatively, the correspondence between an alias and the real identity of the user is known only to the user.

Read, write and edition access to the log file, or to some information in the log file, may be restricted to some users. In an embodiment, only the administrator of the remote data repository 1, or another central authority, such as the owner of the digital rights for the data content, the operator of the network 2, legal authorities, or any limited group of authorized users, is allowed to access the log file. This preserves the confidentiality of the user's information toward most other parties. Each user may however be able to access the part of the log file that concerns his own accesses. In a preferred embodiment, the log file may only be written or edited by methods in the data object itself, and possibly by a central authority, whereas a broader group of people may have read rights to the log file.

The log file may for example comprise one of several files in plain text format, in .XML format, or one of several database files.

If the data object is copied and distributed to several recipients (when allowed), the log file is preferably also copied. Similarly, if the data content is divided into several parts which are stored or forwarded independently from each other, each part preferably contains a complete copy of the log file of the initial data object. On the other hand, if several data objects are aggregated into one single data object, this data object will preferably include an aggregated log file indicating the history of accesses to each part.

The access rights to the data object may depend on the content of the log file, for example if a limited number of accesses to a single object has been purchased.

If the data object is sold, the price and sale conditions may be added to the data object. If a license is attached to the use of the data object, the license conditions, the identity of the licensee, the license code, etc., may be added to the log file and automatically checked against the biometrically verified user identity before each access to the data object. In addition, the access to the data object may be billed to the user based on information recorded in the log file. Conversely, when the data object contains advertising material, or if access to the data object provides any benefit for a third party, information available in the log file may be used for crediting a monetary account or a loyalty program of the user.

Successive editions of the log file may be electronically signed and provided with an electronic time stamp by the responsible editing user. This ensures detection of possible subsequent alterations of the log file content, and non revocability of the editions to the log file.

In an embodiment, the log file may be stored in a remote server, for instance in the remote data repository 1, instead of embedding it into the data object itself.

The addition of a log file embedded into a data object applies to any kind of data object, including data objects embedding an electronic document or e-money, thus allowing traceability of any data object. This feature may even be used with a data object that does not include the reproduction device.

In the embodiments described so far, the data objects are built and distributed by a central data repository 1. The one skilled in the art will understand however that data objects may also be built by any device connected to the network 2, including the user device 3. This would allow for example a user to protect data content created with his personal device with his own biometric data, and to embed into an object the biometric user data and the applications needed for accessing the data content and for capturing the biometric user data.

### First possible scenario

We will now describe as an example a first possible method using the claimed invention, and relating to the purchase of an airline ticket.

During a first enrolment and purchase step, the user of the device 3 purchases an airline ticket, using for example his mobile device 3 or his personal computer 5 on the Web 20. Biometric user data are collected, preferably with the user device 3, and sent for instance as a MMS message to the remote data repository 1, which may be web server of the airline company.

The repository 1 replies by sending a signed and hash-coded data object that is time-stamped and encrypted with the public key of the user 1 and including the following content:
▪ The user's identity,
▪ Biometric data, for instance the user's image, his voice and/or written signature,
▪ Information on the purchased flight, including flight class, start and destination information, etc.,
▪ A biometric user recognition program for capturing the user's biometric data,
▪ Other program code portions for accessing the information on the purchased flight.

When the user of the device 3 arrives at the tollgate, a pairing PAN device 5 preferably automatically establishes a link with the user's device 3, identifies itself with an identification accepted by the device 3, and sends to the device 3 a decryption key. In response to this key, the device 3 sends its data object (for example an electronic flight ticket) to the device 5 together with the embedded biometric data. The object is then decoded with a private key in the device 5, and program code portions embedded in the data object are executed on the device 5 for reproducing the biometric data embedded in the object, allowing the human user of the device 5 to authenticate the user of the device 3 and to verify his rights or his ticket.

In a variant, the device 5 periodically sends over the PAN several decryption keys to the device 3, along with a time synchronization index. The device 3 will synchronously decode and reproduce biometric data on its display and on the display of the device 5. At each new time synchronization index, a new biometric image is displayed. This allows the user of the device 5 to visually check that the images are synchronized on two devices, and therefore that the same software is running on both devices. The successive images could be composed of the image of the user of the first device with for instance changing color boxes, patterns or alphanumeric codes. Other elements may be displayed by the device 3, or by both devices 3 and 5, to prove that the devices 3 and 5 are mutually connected and that the biometric user image displayed by device 3 is indeed extracted from the data object and has not been forged.

In this scenario, the device 5 acts as a kind of wireless software dongle needed by the device 3 to execute the methods or code portions embedded in the data object. Reproduction of data by the device 3 is only possible with the decryption key in the other device 5, or using program code portions in the other device 5.

The data reproduction application and/or biometric user verification of this scenario may be executed automatically when both devices 3, 5 are mutually connected, i.e. when their personal area networks are overlapping.

An advantage of the solution is the possibility to track the user of the device 5 each time he hops from one personal area network to the next one, for instance within an airport or within another place including many PANs or hotspots managed by a same entity.

### Second possible scenario

In this second possible application, the user of the first device 3 purchases a multimedia content, for example an mp3 encoded audio content, from a central repository 1. The repository encapsulates this audio content into an object that contains both the audio content, an audio decompression algorithm (audio player) adapted for his device 3, chosen biometric recognition code portions, and possibly personalized settings and skins for the audio player. The data object further encloses biometric user data uploaded by the user during or before purchase.

The object is then encrypted for example in one of the following ways, whereas the user or authority administrating the repository 1 may decide the encryption method to use for each object:
- An encryption key is computed from the biometric data. A supplementary PIN may be used.
- Or the biometric data are stored directly within the object; the player will only be able to reproduce the data content after successful recognition.
- Or the biometric user data are embedded as a watermark into the data content.

The goal is to ensure that only the enrolled user can listen to the object. Additionally, the number of accesses, or the time window during which access is granted, could be limited within the data object.

The present invention also relates to a program product including a data object for causing a device to perform the above described method when software code portions in said data object are executed by said device.

Furthermore, the present invention also relates to a file system, for example within an operating system, for storing files and granting access to files based on the above described methods. This would allow embedding within each file code portions for reproducing the file and for checking the user's rights to access the file using biometric verifications.

## Claims

1. A processor implemented data reproduction method for reproducing data embedded in a data object, comprising the steps of:
determining features of a user device (3),
building a data object embedding said data, a data reproduction application and a biometric user recognition program, wherein the biometric user recognition program is dependent on the user device's features,
executing the biometric user recognition program embedded in said data object for verifying the rights of said user to access said data,
executing the data reproduction application embedded in said data object for reproducing said embedded data with said user device (3).

2. The method of claim 1, comprising a preliminary enrolment step comprising:
said user device (3) accessing a remote data repository (1) over a public telecommunication network (2; 20; 21) using a web page, web services and/or a message session, said user transmitting to said remote data repository (1) said biometric user data retrieved with said user device (3).

3. The method of claim 2, comprising the steps of:
said user selecting data he wants to download into said user device (3);
retrieving user biometric data by said remote data repository (1),
retrieving said data,
building a data object embedding said user biometric data, said data, said data reproduction application and said biometric user recognition program in said remote data repository (1).
downloading said data to said user device (3) over said public telecommunication network (2; 20; 21).

4. The method of claims 1 or 2, comprising the steps of calculating a hasch code of the data object, adding the hash code to the data object and electronically signing the hash code or whole object with the signature of the remote data repository (1).

5. The method of one of the claims 1 to 4, wherein said biometric user recognition program performs a step of capturing user's biometric characteristics and comparing them with reference biometric characteristics to check if said rights may be granted to said user.

6. The method of one of the claims 1 to 4, wherein said biometric user recognition program performs a step of displaying or reproducing user's reference biometric characteristics,
said method further comprising a step of verifying those characteristics by a human operator who grants or refuses access to data.

7. The method of one of the claims 1 to 6, wherein said biometric user recognition program is executed before each access to said data object.

8. The method of one of the claims 1 to 7, wherein said biometric user recognition program is executed before each copy or installation of said data object.

9. The method of one of the claims 1 to 8, wherein said biometric user recognition program is executed at a random time during use of said data object.

10. The method of one of the claims 1 to 9, wherein said biometric user recognition program is executed after a predetermined number of uses or duration of use of said data object.

11. The method of one of the claims 1 to 10, further comprising a step of decrypting at least a part of said data object within said device (3, 5).

12. The method of claim 11, comprising a step of decrypting at least a part of said data object with a decryption key derived from user's biometric data.

13. The method of one of the claims 2 to 12, wherein the purchase of said data is automatically billed by said remote data repository (1) to said user.

14. The method of one of the claims 2 to 13, wherein said enrolment step comprises a step of embedding a time stamp into said data object.

15. The method of one of the claims 2 to 14, wherein said enrolment step comprises a step of embedding a signature of said remote data repository into said data object.

16. The method of one of the claims 1 to 15, said data object including information sufficient for identifying each successive user of said data object.

17. The method of claim 16, wherein said information sufficient for identifying each successive user is embedded as a watermark in said object.

18. The method of one of the claims 1 to 17, said method comprising:
determining features of said user device (3) and/or user preferences,
embedding, into said data object, a data reproduction application adapted to said features and/or preferences.

19. The method of one of the claims 1 to 18, said method comprising:
determining features of said user device (3) and/or user preferences,
embedding into said data object data in a format adapted to said features and/or preferences.

20. The method of one of the claims 1 to 19, said embedded data being encrypted, the method performed by said user device (3) comprising a step of decrypting said user data using a decryption key retrieved with said user biometric data.

21. The method of one of the claims 1 to 20, wherein said biometric user recognition program is only used for checking if said user belongs to a group of user's authorized to access said data.

22. The method of one of the claims 1 to 21, wherein said biometric user recognition program is used for identifying said user.

23. The method of one of the claims 1 to 22, wherein said biometric user recognition program is used for authenticating said user.

24. The method of one of the claims 1 to 23, comprising a step of adding to said data object information for identifying said user accessing said data object.

25. The method of one of the claims 1 to 24, comprising a step of adding to said data object information about the date of events, for example access, to said data object.

26. The method of one the claims 1 to 25, further comprising a step of generating billing events by said data objects.

27. The method of one of the claims 1 to 26, comprising a step of adding to said data object information for identifying said user device (3).

28. The method of one of the claims 1 to 27, wherein said data object contains a plurality of items of data, and wherein different user rights are assigned to said different items of data.

29. The method of one of the claims 1 to 28, wherein rights are assigned to different users for accessing a single item of data embedded within a single data object.

30. The method of claim 29, wherein rights for a single item of data are purchased by different users at different times.

31. The method of one of the claims 1 to 30, comprising a step of transmitting said data from said user device (3) to a second device (5) over a personal area network, and reproducing said data with said second device (5).

32. The method of claim 31, wherein said data is reproduced by one of said devices using program code portions in both devices (3, 5)

33. A program product for a device, including a data object for causing the device (3) to perform the method of one of the preceding claims when software code portions in said data object are executed by said device.

## Patentansprüche

1. Ein Prozessor implementiertes Datenwiedergabeverfahren zur Wiedergabe von in einem Datenobjekt eingebetteten Daten:
Bestimmen eines Merkmals eines Benutzergeräts (3),
Schaffen eines Datenobjekts, das die Daten, ein Datenwiedergabeprogramm und ein biometrisches Benutzererkennungsprogramm einbettet, wobei das biometrische Benutzererkennungsprogramm von den Benutzergerätmerkmalen abhängig ist,
Ausführen des in das Datenobjekt eingebetteten biometrischen Benutzererkennungsprogramms zur Verifizierung der Rechte des Benutzers, auf die Daten zuzugreifen,
Ausführen des in das Datenobjekt eingebetteten Datenwiedergabeprogramms zur Wiedergabe der eingebetteten Daten mit dem Benutzergerät (3).

2. Das Verfahren nach Anspruch 1, aufweisend einen vorläufigen Registrierungsschritt aufweisend:
das Benutzergerät greift über ein öffentliches Telekommunikationsnetzwerk (2, 20, 21) unter Verwendung einer Webseite, eines Webservices und/oder einer Nachrichtsession auf einen entfernten Datenspeicher (1) zu, wobei der Benutzer die mit dem Benutzergerät bestimmten biometrischen Benutzerdaten an den entfernten Datenspeicher (1) überträgt.

3. Das Verfahren nach Anspruch 2, aufweisend die Schritte des:
der Benutzer wählt Daten, die auf das Benutzergerät (3) herunterladen will, aus;
Holen von biometrischen Benutzerdaten von dem entfernten Datenspeicher (1),
Holen der Daten;
Schaffen eines Datenobjekts in dem entfernten Datenspeicher (1), das die biometrischen Benutzerdaten, die Daten, das Datenwiedergabeprogramm und das biometrische Benutzererkennungsprogramm einbettet;
Herunterladen der Daten auf das Benutzergerät (3) über das öffentliche Telekommunikationsnetzwerk (2; 20; 21).

4. Das Verfahren nach Anspruch 1 oder 2, aufweisend die Schritte des Berechnens eines Hash-Kodes des Datenobjekts, Hinzufügen des Hash-Kodes zu dem Datenobjekt und elektronisches Signieren des Hash-Kodes oder des ganzen Objekts mit der Signatur des entfernten Datenspeichers (1).

5. Das Verfahren nach einem der Ansprüche 1 bis 4, wobei das biometrische Benutzererkennungsprogramm einen Schritt des Erfassens von biometrischen Benutzerkennzeichen und Vergleichen dieser mit biometrischen Referenzkennzeichen zur Kontrolle, ob die Rechte dem Benutzer gewährt werden, ausführt.

6. Das Verfahren nach einem der Ansprüche 1 bis 4, wobei das biometrische Benutzererkennungsprogramm einen Schritt des Darstellens oder Wiedergebens der biometrischen Referenzbenutzerkennzeichen aufweist,
wobei das Verfahren weiter einen Schritt des Verifizierens dieser Kennzeichen durch einen menschlichen Bediensteten, der die Zugangsrechte gewährt oder verweigert, aufweist.

7. Das Verfahren nach einem der Ansprüche 1 bis 6, wobei das biometrische Benutzererkennungsprogramm vor jedem Zugriff auf das Datenobjekt ausgeführt wird.

8. Das Verfahren nach einem der Ansprüche 1 bis 7, wobei das biometrische Benutzererkennungsprogramm vor jeder Kopie oder Installation des Datenobjekts ausgeführt wird.

9. Das Verfahren nach einem der Ansprüche 1 bis 8, wobei das biometrische Benutzererkennungsprogramm zu willkürlichen Zeitpunkten während der Benutzung des Datenobjekts ausgeführt wird.

10. Das Verfahren nach einem der Ansprüche 1 bis 9, wobei das biometrische Benutzererkennungsprogramm nach einer vorbestimmten Anzahl der Benutzungen oder Dauer der Benutzung des Datenobjekts ausgeführt wird.

11. Das Verfahren nach einem der Ansprüche 1 bis 10, weiter aufweisend einen Schritt des Entschlüsselns mindestens eines Teils des Datenobjekts in dem Gerät (3, 5).

12. Das Verfahren nach Anspruch 10, aufweisend den Schritt des Entschlüsseln mindestens eines Teils des Datenobjekts mit einem Entschlüsselungsschlüssel, der aus den biometrischen Daten des Benutzers hergeleitet wird.

13. Das Verfahren nach einem der Ansprüche 2 bis 12, wobei der Kauf von den Daten automatisch von dem entfernten Datenspeicher (1) an den Benutzer verrechnet wird.

14. Das Verfahren nach einem der Ansprüche 2 bis 13, wobei der Registrierungsschritt einen Schritt des Einbettens eines Zeitstempels in das Datenobjekt aufweist.

15. Das Verfahren nach einem der Ansprüche 2 bis 14, wobei der Registrierungsschritt einen Schritt des Einbettens einer Signatur des Datenspeichers in das Datenobjekt aufweist.

16. Das Verfahren nach einem der Ansprüche 1 bis 15, wobei das Datenobjekt Informationen, die zur Identifizierung jedes aufeinanderfolgenden Benutzers des Datenobjekts ausreichen, enthält.

17. Das Verfahren nach Anspruch 16, wobei die Informationen, die zur Identifizierung jedes aufeinanderfolgenden Benutzers des Datenobjekts ausreichen, als Wasserzeichen in dem Objekt eingebettet sind.

18. Das Verfahren nach einem der Ansprüche 1 bis 17, wobei das Verfahren aufweist:
Bestimmen der Merkmale des Benutzergeräts (3) und/oder von Benutzervorzügen,
Einbetten eines für die Merkmale oder Vorzüge angepasstes Datenwiedergabeprogramms in das Datenobjekt.

19. Das Verfahren nach einem der Ansprüche 1 bis 18, wobei das Verfahren aufweist:
Bestimmen der Merkmale des Benutzergeräts (3) und/oder von Benutzervorzügen,
Einbetten von Daten in einem Format, das für die Merkmale und/oder Vorzüge geeignet ist, in das Datenobjekt.

20. Das Verfahren nach einem der Ansprüche 1 bis 19, wobei die eingebetteten Daten verschlüsselt sind, wobei das von dem Benutzergerät (3) durchgeführte Verfahren einen Schritt des Entschlüsselns der Benutzerdaten unter Verwendung eines von den biometrischen Benutzerdaten bestimmten Entschlüsselungsschlüssels aufweist.

21. Das Verfahren nach einem der Ansprüche 1 bis 20, wobei das biometrische Benutzererkennungsprogramm nur das Überprüfen, ob der Benutzer zu einer Gruppe von für den Zugriff autorisierten Benutzern gehört, verwendet wird.

22. Das Verfahren nach einem der Ansprüche 1 bis 20, wobei das biometrische Benutzererkennungsprogramm für die Identifizierung des Benutzers verwendet wird.

23. Das Verfahren nach einem der Ansprüche 1 bis 22, wobei das biometrische Benutzererkennungsprogramm für die Authentisierung des Benutzers verwendet wird.

24. Das Verfahren nach einem der Ansprüche 1 bis 23 aufweisend einen Schritt des Hinzufügens von Informationen zur Identifizierung des auf das Datenobjekt zugreifenden Benutzers zu dem Datenobjekt.

25. Das Verfahren nach einem der Ansprüche 1 bis 24 aufweisend einen Schritt des Hinzufügens von Informationen über Eventdaten, z.B. Zugang, des Datenobjekts zu dem Datenobjekt.

26. Das Verfahren nach einem der Ansprüche 1 bis 25 aufweisend einen Schritt des Erzeugens eines Abrechnungsevents von dem Datenobjekt.

27. Das Verfahren nach einem der Ansprüche 1 bis 26 aufweisend einen Schritt des Hinzufügens von Informationen zur Identifizierung des Benutzergeräts zu dem Datenobjekt.

28. Das Verfahren nach einem der Ansprüche 1 bis 27, wobei das Datenobjekt eine Vielzahl von Dateneinheiten aufweist, und wobei verschiedene Benutzerrechte zu verschiedenen Dateneinheiten zugewiesen sind.

29. Das Verfahren nach einem der Ansprüche 1 bis 28, wobei Rechte für den Zugriff auf eine einzelne innerhalb eines einzelnen Datenobjekts eingebettete Dateneinheit verschiedenen Benutzern zugewiesen werden.

30. Das Verfahren nach Anspruch 29, wobei Rechte für eine einzelne Dateneinheit von verschiedenen Benutzern zu verschiedenen Zeiten gekauft werden.

31. Das Verfahren nach einem der Ansprüche 1 bis 30, aufweisend einen Schritt des Übertragens der Daten von dem Benutzergerät (3) zu einem zweiten Gerät über ein Personal Area Network und wiedergeben der Daten mit dem zweiten Gerät (5).

32. Das Verfahren nach Anspruch 31, wobei die Daten von einem der Geräte unter Verwendung von Programmcodeteilen in beiden Geräten (3, 5) wiedergegeben werden.

33. Ein Programmprodukt für ein Gerät, aufweisend ein Datenobjekt, um das Gerät (3) dazu zu bringen, das Verfahren nach einem der vorigen Ansprüche auszuführen, wenn Softwarecodeteile in dem Datenobjekt von dem Gerät ausgeführt werden.

## Revendications

1. Un procédé de restitution de données mis en oeuvre par microprocesseur pour restituer des données intégrées dans un objet de données, comprenant les étapes de:
déterminer les caractéristiques d'un dispositif utilisateur (3),
construire un objet de données intégrant lesdites données, une application de restitution de données et un programme de reconnaissance biométrique d'utilisateur, dans lequel le programme de reconnaissance biométrique d'utilisateur dépend des caractéristiques du dispositif utilisateur,
exécuter le programme de reconnaissance biométrique d'utilisateur intégré dans ledit objet de données pour vérifier les droits dudit utilisateur d'accéder auxdites données,
exécuter l'application de restitution de données intégrée dans ledit objet de données pour restituer lesdites données intégrées au moyen dudit dispositif utilisateur (3).

2. Le procédé de la revendication 1, comprenant une étape préliminaire d'inscription, comprenant:
pour ledit dispositif utilisateur (3) d'accéder un référentiel de données à distance (1) par le biais d'un réseau publique de télécommunications (2; 20; 21) en utilisant une page web, des services web et/ou une session de messagerie, ledit utilisateur transmettant audit référentiel de données à distance (1) lesdites données biométriques d'utilisateur restituées au moyen dudit dispositif utilisateur (3).

3. Le procédé de la revendication 2, comprenant les étapes de:
pour ledit utilisateur de sélectionner les données qui sont à télécharger dans ledit dispositif utilisateur (3);
de récupérer les données biométriques d'utilisateur par ledit référentiel de données à distance (1),
de récupérer lesdites données,
de construire un objet de données intégrant lesdites données biométriques d'utilisateur, lesdites données, ladite application de restitution de données et ledit programme de reconnaissance biométrique d'utilisateur dans ledit référentiel de données à distance (1),
télécharger lesdites données sur ledit dispositif utilisateur (3) par le biais dudit réseau publique de télécommunications (2; 20; 21).

4. Le procédé des revendications 1 ou 2, comprenant les étapes de calculer un code de hachage de l'objet de données, d'ajouter le code de hachage à l'objet de données et de signer électroniquement le code de hachage ou l'objet entier avec la signature du référentiel de données à distance (1).

5. Le procédé de l'une des revendications 1 à 4, dans lequel ledit programme de reconnaissance biométrique d'utilisateur effectue une étape de capturer les caractéristiques biométriques de l'utilisateur et de les comparer avec des caractéristiques biométriques de référence pour vérifier si lesdits droits peuvent être accordés audit utilisateur.

6. Le procédé de l'une des revendications 1 à 4, dans lequel ledit programme de reconnaissance biométrique d'utilisateur effectue une étape d'afficher ou de restituer les caractéristiques biométriques de référence de l'utilisateur,
ledit procédé comprenant en outre une étape de vérifier lesdites caractéristiques par un opérateur humain qui accorde ou refuse l'accès aux données.

7. Le procédé de l'une des revendications 1 à 6, dans lequel ledit programme de reconnaissance biométrique d'utilisateur est exécuté avant chaque accès audit objet de données.

8. Le procédé de l'une des revendications 1 à 7, dans lequel ledit programme de reconnaissance biométrique d'utilisateur est exécuté avant chaque copie ou installation dudit objet de données.

9. Le procédé de l'une des revendications 1 à 8, dans lequel ledit programme de reconnaissance biométrique d'utilisateur est exécuté à un moment aléatoire pendant l'utilisation dudit objet de données.

10. Le procédé de l'une des revendications 1 à 9, dans lequel ledit programme de reconnaissance biométrique d'utilisateur est exécuté après un nombre prédéterminé d'utilisations ou une durée prédéterminée d'utilisation dudit objet de données.

11. Le procédé de l'une des revendications 1 à 10, comprenant en outre une étape de décrypter au moins une partie dudit objet de données au sein dudit dispositif (3, 5).

12. Le procédé de la revendication 11, comprenant une étape de décrypter au moins une partie dudit objet de données au moyen d'une clé de décryptage dérivée à partir des données biométriques d'utilisateur.

13. Le procédé de l'une des revendications 2 à 12, dans lequel l'achat desdites données est facturé automatiquement audit utilisateur par ledit référentiel de données à distance (1).

14. Le procédé de l'une des revendications 2 à 13, dans lequel ladite étape d'inscription comprend une étape d'intégrer une marque temporelle dans ledit objet de données.

15. Le procédé de l'une des revendications 2 à 14, dans lequel ladite étape d'inscription comprend une étape d'intégrer une signature dudit référentiel de données à distance dans ledit objet de données.

16. Le procédé de l'une des revendications 1 à 15, ledit objet de données comprenant des informations suffisantes pour identifier chaque utilisateur successif dudit objet de données.

17. Le procédé de la revendication 16, dans lequel ladite information suffisante pour identifier chaque utilisateur successif est intégré en tant que tatouage numérique dans ledit objet.

18. Le procédé de l'une des revendications 1 à 17, ledit procédé comprenant:
de déterminer les caractéristiques dudit dispositif utilisateur (3) et/ou les préférences d'utilisateur,
d'intégrer, dans ledit objet de données, une application de restitution de données adaptée auxdites caractéristiques et/ou préférences.

19. Le procédé de l'une des revendications 1 à 18, ledit procédé comprenant:
de déterminer les caractéristiques dudit dispositif utilisateur (3) et/ou les préférences d'utilisateur,
d'intégrer, dans ledit objet de données, des données dans un format adapté auxdites caractéristiques et/ou préférences.

20. Le procédé de l'une des revendications 1 à 19, lesdites données intégrées étant encryptées, le procédé exécuté par ledit dispositif utilisateur (3) comprenant une étape de décryptage desdites données d'utilisateur en utilisant une clé de décryptage récupérée au moyen desdites données biométriques d'utilisateur.

21. Le procédé de l'une des revendications 1 à 20, dans lequel ledit programme de reconnaissance biométrique d'utilisateur est utilisé uniquement pour vérifier si ledit utilisateur appartient à un group d'utilisateurs autorisés à accéder auxdites données.

22. Le procédé de l'une des revendications 1 à 21, dans lequel ledit programme de reconnaissance biométrique d'utilisateur est utilisé pour identifier ledit utilisateur.

23. Le procédé de l'une des revendications 1 à 22, dans lequel ledit programme de reconnaissance biométrique d'utilisateur est utilisé pour authentifier ledit utilisateur.

24. Le procédé de l'une des revendications 1 à 23, comprenant une étape d'ajouter audit objet de données des informations pour identifier ledit utilisateur accédant audit objet de données.

25. Le procédé de l'une des revendications 1 à 24, comprenant une étape d'ajouter audit objet de données des informations sur la date d'événements, par exemple l'accès, audit objet de données.

26. Le procédé de l'une des revendications 1 à 25, comprenant en outre une étape de générer des événements de facturation par lesdits objets de données.

27. Le procédé de l'une des revendications 1 à 26, comprenant une étape d'ajouter audit objet de données des informations pour identifier ledit dispositif utilisateur (3).

28. Le procédé de l'une des revendications 1 à 27, dans lequel ledit objet de données contient une pluralité d'éléments de données, et dans lequel différents droits d'utilisateur sont attribués auxdits différents éléments de données.

29. Le procédé de l'une des revendications 1 à 28, dans lequel des droits sont attribués à différents utilisateurs pour accéder à un seul élément de données intégré au sein d'un seul objet de données.

30. Le procédé de la revendication 29, dans lequel des droits pour un seul élément de données sont achetés par différents utilisateurs à différents moments.

31. Le procédé de l'une des revendications 1 à 30, comprenant une étape de transmettre lesdites données depuis ledit dispositif d'utilisateur (30) à un deuxième dispositif (5) au travers d'un réseau local personnel et de restituer lesdites données au moyen dudit deuxième dispositif (5).

32. Le procédé de la revendication 31, dans lequel lesdites données sont restituées par l'un desdits dispositifs utilisant des portions de code informatique dans les deux dispositifs (3, 5).

33. Un produit logiciel pour un dispositif, comprenant un objet de données pour causer le dispositif (3) à exécuter le procédé de l'une des revendications précédentes lorsque des portions de code informatique dans ledit objet de données sont exécutées par ledit dispositif.
